(19) **Europäisches Patentamt / European Patent Office / Office européen des brevets**

(11) **EP 4 745 561 A2**

(12) # EUROPEAN PATENT APPLICATION

(43) Date of publication:
20.05.2026 Bulletin 2026/21

(21) Application number: 26168234.8

(22) Date of filing: 14.07.2022

(51) International Patent Classification (IPC):
**G01N 21/47** $^{(2006.01)}$

(52) Cooperative Patent Classification (CPC):
**G01J 3/465; G01J 3/0208; G01J 3/0289; G01J 3/10; G01J 3/502; G01J 3/504; G01N 21/251; G01N 21/255; G01N 21/31; G01N 21/8903;** G01N 21/4738; G01N 2201/0221; G01N 2201/0633; G01N 2201/105

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**22382673.6 / 4 306 922**

(71) Applicant: **Fyla Laser, S.L.**
**46980 Paterna (Valencia) (ES)**

(72) Inventors:
• **PÉREZ MILLÁN, Pere**
**46980 Paterna (Valencia) (ES)**
• **GARCÍA DE LA REINA CARRIÓ, Aitor**
**46980 Paterna (Valencia) (ES)**

• **GUTIÉRREZ BENITO, Martín**
**46980 Paterna (Valencia) (ES)**
• **IRLES ANTÓN, Esther**
**46980 Paterna (Valencia) (ES)**

(74) Representative: **González Poveda, Sara**
**INGENIAS**
**Creaciones, Signos e Invenciones S.L.**
**Avda. Diagonal 514, 1o 4a**
**08006 Barcelona (ES)**

Remarks:
This application was filed on 26.03.2026 as a divisional application to the application mentioned under INID code 62.

(54) **SYSTEM AND METHOD FOR MEASURING THE COLOR OF AN AREA OF A SAMPLE**

(57) A system and method to measure the color of an area of a sample. The system comprises a light source; a first optical arrangement to scan an area of the sample, part by part; a second optical arrangement comprising a second optical device and an optical element, to collect light scattered from the sample; an optical spectrometer to receive the collected scattered light and measure an optical spectrum for each part; and a computing device. The system is configured for synchronizing the scanning of the area with the recording of the optical spectra for the area's parts. The second optical device is configured to, in synchronization with the first optical device, change and dynamically orient a direction of propagation of the redirected scattered light. The computing device determines color coordinates, computes and analyzes an overall optical spectrum, calculates XYZ Tristimulus values.

**Fig. 1**

EP 4 745 561 A2

## Description

Technical Field

The present invention is directed, in general, to color measurement. In particular, present invention relates to a system and to a method for measuring the color of an area of a sample.

Background of the Invention

Some of the most demanding color measurement applications require systems and methods that can provide accurate color measurements at high speeds and at a low financial cost. Some further demanding applications additionally require measuring the color of objects from a distance, and with the ability to do this in combination with other parallel processes, e.g. processes happening in a production line in a factory. A great part of the available prior art in the field of color measurement does not meet several of the aforementioned demands, because it concerns systems and methods which for the purpose of achieving accurate and fast measurement require the use of complex and expensive equipment as well as the existence of special conditions, e.g. zero or very low environmental lighting, and/or placing the sample inside or in contact with a special casing, and/or touching the sample with the color measurement device, said special conditions being incompatible with the context in which the color measurement has to be taken. Likewise, determining accurately the color of a sample often requires performing accurate multi-angle measurements on said sample, but taking said multi-angle measurements from a distance and under strong lighting of the sample by the environment, is challenging.

Patent application document US 2018/0180480 A1 describes a multi-angle colorimeter that includes a light illuminating and receiving optical system, a spectroscopic block, a control unit, and a casing, and also describes that it is possible to measure the color of a sample of which an observed color is changed in accordance with a colorimetric observation direction at each of a plurality of light receiving angles. However, US 2018/0180480 A1 also describes that at the time of measuring color, a pressing portion of the casing is pressed against the sample.

Likewise, patent application document US 2006/0109474 A1 describes a multi-angle colorimeter for measuring an object, and the colorimeter includes an illumination system, a toroidal mirror, a light detecting system, a controller/-calculator and a casing body that has a measurement opening, wherein the measurement opening is to oppose the object surface and has a perimeter for defining a predetermined measurement area on the object surface.

From the above it is understood that there are needed methods and systems for accurately measuring color of a sample from a distance and with the ability for simultaneously offering multi-angle measurements. Furthermore, there are needed methods and systems which for the purpose of the aforementioned accurate measurements of colors, especially during said multi-angle measurements, ensure or aim that it is not required nor is necessary to re-position during the measurements an illumination source and/or a spectrometer, nor is required to use a plurality of illumination sources and/or spectrometers.

Description of the Invention

The present invention provides a system and a method to measure color, where color is measured remotely, in-line, or at-line or off-line, and in real time, the measurement being immune to surrounding illumination light. The system and method is non-invasive: after the analysis the sample under study remains undamaged and unaltered (e.g. there is no need for cutting a piece of the sample to measure its color). The invention is suitable to measure color of various materials such as textiles, polymers, organic materials, plastics, glass, metals, woods, ceramics and pigments (natural or synthetic) for painting or dyeing, among others. The invention allows for advanced color measurement within or closely to existing production lines or other complex setups. The invention offers a system that is easily scalable, robust and may be made to be compact and have a small form factor for being versatile and portable. The invention does not result to the use of very expensive equipment. The invention allows for measuring areas of different sizes and shapes. The invention allows for performing color mapping at high resolution. Very importantly, the invention allows for performing multi-angle color measurements without requiring to re-position during the measurements an illumination source and/or a spectrometer, nor requiring the use of a plurality of illumination sources and/or spectrometers.

To that purpose, embodiments of the present invention disclose a system to measure the color of an area of a sample, comprising: a light source configured to emit light to illuminate a sample; a first optical arrangement configured to receive said light, to output and direct a collimated beam of said light towards a surface of the sample that is located at a given distance, the first optical arrangement comprising a first optical device configured to change and dynamically orient a direction of the collimated beam towards the sample thereby scanning an area of the sample, part-by-part; a second optical arrangement which, upon illumination of the sample with the collimated beam, is configured to collect light scattered from the sample; an optical spectrometer configured to receive the collected scattered light (i.e. the scattered light collected by the second optical arrangement) and to record an optical spectrum of the collected scattered light for each (scanned) part;

and a computing device operatively connected to the optical spectrometer. Part-by-part may be line-by-line or point-by-point or spot-by-spot. Preferably the area is scanned by illuminating on lines of the area, that is to say the area is scanned line-by-line. The scattered light received by the optical spectrometer may be or comprise back-scattered light, i.e. light that is back-scattered from the sample upon the illumination of the sample with the collimated beam.

The second optical arrangement comprises a second optical device and an optical element. The second optical device is configured to receive light scattered by the sample at an angle of observation $\alpha$ relative to a direction of a specular component reflected from the sample upon the incidence of the collimated beam on the surface of the sample. Also, said second optical device is further configured to redirect the received scattered light towards the optical element.

Moreover, said second optical device is further configured to, in synchronization with the first optical device, change and dynamically orient a direction of propagation of the redirected scattered light such that during the scanning of the area of the sample said direction of propagation of the redirected scattered light remains constant (i.e. the same) with respect to the optical element.

In the proposed system, the light emitted by the light source comprises a spectrum of wavelengths that are emitted simultaneously, and said spectrum covers, continuously, at least a band of wavelengths within the visible range, from a first wavelength to a second wavelength. In addition, the light emitted by the light source is spatially coherent, at least for all the band's wavelengths from the first wavelength to the second wavelength. The spectrum is most preferably a broad spectrum, and for example a spectrum that is more than 50 nm or 100 nm wide.

Moreover, the system is configured for, when the first optical device scans the area, synchronizing the scanning of said area with the recording by the optical spectrometer of the optical spectra for the area's parts. Likewise, the system is configured so that the recording of the optical spectrum of each part (each part being scanned) lasts an optical spectrum integration time that is equal to the duration of the scan of said part by the first optical device.

The first optical arrangement, for outputting the collimated beam, is configured to preserve collimated said spatially coherent light if or when the latter is collimated, and/or said optical arrangement further comprises a collimator to perform a collimation of the spatially coherent light. Preferably the collimator is located at a specific distance from an end of the light source.

Therefore, the spatially coherent light emitted by the light source may or may not be collimated when exiting the light source. Likewise said light may or may not be collimated before being received by the first optical arrangement. The latter may preserve a collimation of the light by having optical elements that do not destroy said collimation. Likewise, the first optical arrangement may comprise a collimator as mentioned above to cause or to improve a collimation of the light. Likewise, optionally the system may comprise a collimator in between said light source and the first optical arrangement, for collimating light that goes from the source to the first optical arrangement.

According to the above it is contemplated the option that the first optical arrangement has a collimator, e.g. a collimating lens or a collimating mirror, located at a distance (corresponding to the focal length of the collimator) from an end of the light source to transform the spatially coherent light into a collimated beam.

The computing device is configured to determine color coordinates of the area of the sample in a given color space, by means of computing an overall optical spectrum from a statistical calculation over all or some of the optical spectra corresponding to all or some of the scanned parts of the area and by analyzing the overall optical spectrum, said analyzing comprising calculating the XYZ Tristimulus values corresponding to said overall optical spectrum. It can be clearly understood that computing the overall optical spectrum entails performing said statistical calculation i.e. computing the overall optical spectrum includes or is done by (by means of) performing said statistical calculation.

Said overall optical spectrum may optionally be the statistical average (mean), median or mode, among other statistical figures of merit, of all or some of the optical spectra corresponding to all or some of the scanned parts of the area. Preferably, said overall optical spectrum is the average (mean) optical spectrum, calculated over all the optical spectra corresponding to all the scanned parts of the area.

In a preferred embodiment, the direction of propagation of the redirected scattered light is parallel to a principal optical axis of the optical element. Also, preferably said optical element is an off-axis parabolic mirror. Hence, the system may advantageously benefit from a well functional optical design which yet is simple to implement.

In a preferred embodiment, the angle of observation $\alpha$ is about 45 degrees, and the first optical device is further configured to, during the part-by-part scanning of the area of the sample, change and dynamically orient the direction of the collimated beam about a central direction which is normal to the surface of the sample. Hence, the system may optionally offer CIE 0/45 (i.e. 0°/45°) color measurements as required for standardization purposes in many industrial applications.

In a preferred embodiment, the first optical device and the second optical device comprise respective galvanometer (galvanometric, galvo) mirrors. The use of galvanometer mirrors, in particular commercially available ones, can advantageously simplify the overall optical design of the system. Also, optionally and preferably the second optical arrangement further comprises an optical fiber optically coupled to the optical spectrometer. The use of an optical fiber for optically coupling (i.e. connecting) the spectrometer with the second optical arrangement can advantageously contribute to minimizing the form factor of the system, and/or for making said system portable. Moreover, in a preferred embodiment the optical element is configured to receive the scattered light that is redirected by the optical element, and to further redirect said light towards an input of the aforementioned optional optical fiber.

In a preferred embodiment, the optical element of the system is an off-axis parabolic mirror with a through hole, and the system further comprises a laser configured to emit laser light through said hole and towards the second optical device. Hence, the second optical device may further redirect said laser light towards the surface of the sample. Using the positions of the laser light and of the collimated beam illuminating the sample, it is possible that, before doing the color measurements, doing an optical alignment of the first and second optical devices. Said optical alignment can serve so that said laser light and collimated beam coincide on the surface of the sample, for ensuring that the second optical device properly redirects the scattered optical light parallelly to an optical axis of said off-axis parabolic mirror. This way, the second optical arrangement's collection of scattered light may advantageously be optimized.

Optionally and preferably, the spatially coherent light source is or comprises a supercontinuum light source. Optionally the light source, e.g. said optional supercontinuum light source, comprises a nonlinear optical fiber or an optical fiber that is configured to be excited by light and to emit supercontinuum. Advantageously, this option may further allow having a compact, durable and portable system.

In an embodiment, the first wavelength is comprised in a range between 370 nm and 460 nm, and the second wavelength is comprised in a range between 620 nm and 780 nm. In a particular embodiment the first wavelength is 430 nm. In another particular embodiment the second wavelength is 750 nm. In another particular embodiment the first wavelength is 400 nm. In another particular embodiment the second wavelength is 780 nm. In yet another particular embodiment, the first wavelength is 380 nm and the second wavelength is 750 nm. Optionally controlling the first and second wavelength may improve the accuracy of the measurement and/or allow for adapting the system according to an expected color of a sample.

In an embodiment, the collimated beam has a maximum full-angle angular divergence of 0.46 degrees or less for all the wavelengths from the first wavelength to the second wavelength. Optionally and preferably said maximum full-angle angular divergence is of between 0.01 and 0.20 degrees for all the wavelengths from the first wavelength to the second wavelength. This option may allow for controlling the directionality and diameter of the beam and may contribute to accurately measuring samples at various distances from the system.

In an embodiment, the first optical arrangement comprises the collimator that preferably is a collimating lens, and at a distance from the collimator, said distance corresponding to a focal length of the collimator, a diameter of the transversal section of the collimated beam is 5 mm or less, particularly less than 2.15 mm, for all the wavelengths from the first wavelength to the second wavelength, the diameter being considered at $1/e^2$ width. This option may contribute to achieving a high spatial resolution and a good signal-to-noise ratio during measurements.

In an embodiment, the diameter of a transversal section of the collimated beam, for all the wavelengths from the first wavelength to the second wavelength is of 10 mm or less at any distance of 1 m or less from a point at the first optical arrangement, and/or said diameter is of 100 mm or less at any distance of 10 m or less from said point at the first optical arrangement, the diameter being considered at $1/e^2$ width. Preferably said point is at the collimator when (if) the first optical arrangement comprises said collimator. Likewise, optionally said point is at the optical exit from the first optical arrangement, said optical exit being an optical port or an aperture or a material or a gap from which the optical beam exits the first optical arrangement.

Likewise, optionally said point is at the first optical device that is configured to change and dynamically orient a direction of the light. These options may contribute to improving measuring samples at various distances, with good resolution, and even when the samples receive lots of other light from the environment.

In an embodiment, the beam quality factor $M^2$ of the collimated beam, for all the wavelengths from the first wavelength to the second wavelength, is comprised in a range between 1.0 and 2.0. In a particular embodiment, such quality factor $M^2$ is lower than 1.4. This option may contribute to controlling and optimizing the illumination of the sample by the system.

In an embodiment, the brightness of the collimated beam, composed of all the wavelengths from the first wavelength to the second wavelength, is of 1 mW/cm² or higher at any distance of 1 m or less from a point at the first optical arrangement; optionally or complementary, said brightness is of 0.01 mW/cm² or higher at any distance of 10 m or less from said point at the first optical arrangement, wherein said point preferably is at the collimator when (if) the first optical arrangement comprises said collimator. In a particular embodiment, such brightness is of 136 mW/cm² at a distance of 1 m from the collimating lens, and of 2.8 mW/cm² at a distance of 10 m from the collimating lens. These options may contribute to optimizing the accuracy of the measurement.

Embodiments of the present invention also disclose a method for measuring the color of an area of a sample. The method comprises emitting light with a light source for illuminating a sample located at a given distance by a light source, the light comprising a spectrum of wavelengths that are emitted simultaneously, the spectrum covering continuously, at least, a band of wavelengths within the visible range, from a first wavelength to a second wavelength, and the light being spatially coherent, at least at all wavelengths from the first wavelength to the second wavelength; receiving the spatially coherent light at a first optical arrangement located at a distance from an end of the light source; at the first optical arrangement, preserving collimated the spatially coherent light if the latter is collimated, and/or collimating with a collimator said spatially coherent light; outputting and directing, by the first optical arrangement, a collimated beam of the spatially coherent light towards a surface of the sample that is located at a given distance from the first optical arrangement; scanning an area of the sample, part-by-part; by a first optical device of the first optical arrangement changing and dynamically orienting a direction of the directed collimated beam; collecting by a second optical arrangement light scattered from the sample, the second optical arrangement comprising a second optical device and an optical element; recording, by an optical spectrometer, an optical spectrum of scattered light collected, by the second optical arrangement, from the sample for each (scanned) part; synchronizing the scanning of said area with the recording by the optical spectrometer of the optical spectra for the area's parts, wherein the recording of the optical spectrum of each part lasting an optical spectrum integration time that is equal to the duration of the scan of said part by the optical device; and measuring, by a computing device operatively connected to the optical spectrometer, color coordinates of the area of the sample in a given color space by means of computing an overall optical spectrum from a statistical calculation over all or some of the optical spectra corresponding to all or some of the scanned parts of the area and by (by means of) analyzing the overall optical spectrum, said analyzing comprising calculating the XYZ Tristimulus values corresponding to said overall optical spectrum. In the method according to the invention, said collecting of scattered light by the second optical arrangement comprises: receiving, by the second optical device, light scattered by the sample at an angle of observation relative to a direction of a specular component reflected from the sample upon (i.e. due to) the incidence of the collimated beam on the surface of the sample; redirecting, by said second optical device, the received scattered light towards the optical element; and, by said second optical device in synchronization with the first optical device, during the scanning of the area of the sample, changing and dynamically orienting a direction of propagation of the redirected scattered light such that said direction of propagation of the redirected scattered light remains constant with respect to the optical element.

In the method, optionally and preferably the given distance of the sample's location from the first optical arrangement is 0.5 m or longer. Optionally, the method comprises providing the sample at the given distance.

In an embodiment, a time dependent voltage signal is used for performing said synchronizing. Preferably, said voltage signal is squared.

In an embodiment, the sample while being illuminated with the collimated beam further receives other light from the environment.

In an embodiment, the optical spectrum integration time is determined by continuously scanning, by the first optical device, a portion of an area of a white reference; simultaneously to said scanning of the portion, recording, by the optical spectrometer, the optical spectrum with different optical spectrum integration times, which are increased progressively and discretely with a certain constant time difference; and selecting as the optical spectrum integration time the maximum optical spectrum integration time for which the recorded optical spectrum is not saturated at any wavelength. Optionally and preferably said portion is a perimeter of said area of the white reference.

In an embodiment, calculating the XYZ Tristimulus values comprises: computing a reflectance curve using the overall optical spectrum of the area of the sample, an overall optical spectrum of a white reference and a background spectrum, preferably "overall" being "average"; multiplying the computed reflectance curve by a CIE standard illuminant spectral curve, by a CIE standard observer spectral curve and by a normalizing constant. It is noted that the CIE standard observer is described by 3 different spectral curves (functions), i.e. three CIE standard observer spectral curves (functions), each distinctively used for calculation of X, Y and Z, respectively [ref. 4, ref. 5].

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Brief Description of the Drawings

The previous and other advantages and features will be more fully understood from the following detailed description of embodiments, with reference to the attached figures, which must be considered in an illustrative and non-limiting manner, in which:

Fig. 1 schematically illustrates a system for measuring the color of an area of a sample, according to an embodiment of the present invention.

Fig. 2A shows a graphical explanation of the spatio-temporal procedure of synchronization between sample scanning and optical spectra recording.

Fig. 2B shows an oscilloscope trace of an example of voltage signal for synchronization between galvanometric scanner and optical spectrometer.

Figs. 3A-C and Fig. 4 are pictures showing steps of illumination of a sample similarly to some embodiments of the method according to the invention.

Fig. 5 describes a case wherein there is a dependence of perception of color on the relative orientation between illuminating source, sample and observer. Fig. 5 also shows an angle $\theta$ of reflection of the specular component and an angle $\alpha$ of observation relative to the direction of the specular component.

Fig. 6A schematically shows an embodiment of a system according to the invention.

Fig. 6B schematically shows an embodiment of a system according to the invention.

Fig. 7A schematically shows an embodiment of a system according to the invention.

Fig. 7B schematically shows an embodiment of a system according to the invention.

Fig. 8 shows a measured reflectance spectrum of a coated aluminum sample using embodiments of the system and method of the present invention. Fig. 8 also shows the theoretical reflectance spectrum provided by the sample's manufacturer.

Detailed Description of Preferred Embodiments

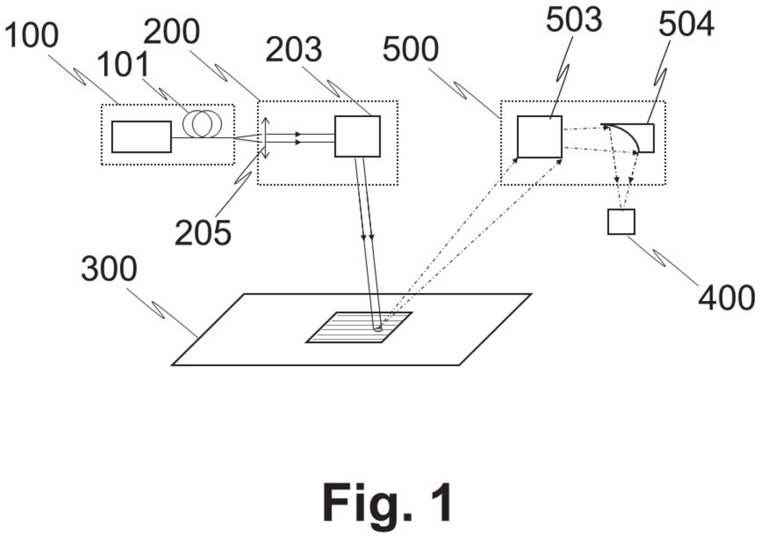

Fig.1 shows an embodiment of the proposed system to measure the color of an area of a sample 300. Some non-limiting examples of said sample are: a textile, polymer, organic material, plastic, glass, metal, wood, ceramic, pigment (natural or synthetic), etc. In the embodiment of Fig. 1 the system includes a light source 100; a first optical arrangement 200; a second optical arrangement 500: an optical spectrometer 400 and a computing device (not shown) with one or more processors and at least one memory operatively connected to the optical spectrometer 400.

The light emitted by the light source 100 comprises a spectrum of wavelengths that are emitted simultaneously. Regarding the embodiment in Fig. 1, said spectrum covers continuously, at least, a band of wavelengths within the visible range, from a first wavelength (370 - 460 nm) to a second wavelength (620 - 780 nm).

The light emitted by the light source 100 is spatially coherent, at least for all wavelengths from the first wavelength to the second wavelength. Preferably said spatially coherent light is propagated in the form of a collimated beam, at least, as well, for all wavelengths from the first wavelength to the second wavelength. In accordance to known definitions, by spatially coherent light it should be understood light having a beam profile wherein the electric fields at different locations across the beam profile have a phase relationship that is fixed, and hence said electric fields are correlated. The spatial coherence of the light allows for rendering the used light highly directional, which in turn facilitates minimizing any optical losses of the system, as well as allowing for robust color measurements and possibly high resolution color mapping of the sample, even when the latter is far away from the system or receives lots of ambient light.

The spatially coherent light may preferably have a high degree of spatial coherence. The degree of spatial coherence may be determined, for example, by the modulus of the complex degree of mutual coherence $|\gamma_{12}(\Delta z \cong 0)|$, between pairs of points 1 and 2 over the transversal section of the beam [ref. 1], and measured, for example, by a fiber optic interferometer or by the method of the Young's double slit, as in [ref.1, ref.2]. For the spatially coherent light in the system, said modulus of the complex degree of mutual coherence may preferably be, for example, in a range between 0.5 and 1.0, preferably between 0.8 and 1.0, at least for all wavelengths from a first wavelength (370 - 460 nm) to a second wavelength (620 - 780 nm).

In a preferred embodiment, and also in the embodiment of Fig. 1, the light source 100 is a fiber optic supercontinuum source, where the supercontinuum light is generated in an optical fiber and is delivered to the end of the source through said optical fiber 101 or through another optical fiber 101. In such embodiment, the end of the source is the end of said fiber 101 used to deliver the light of the supercontinuum source. In said preferred embodiment, the light is emitted to free space (e.g. air) from such end, which is the interface between the optical fiber and the free space (e.g. air), that can be in the form of a transversal polished interface (e.g. an ultra-physical contact connector, UPC) or an angled polished interface (e.g. an angled polished connector, APC), among others.

In said preferred embodiment the spectrum of the supercontinuum light covers continuously, at least, a band of wavelengths from a first wavelength (370 - 460 nm) to a second wavelength (620 - 780 nm). In said preferred embodiment all these wavelengths are propagated only in the fundamental transversal mode of the optical fiber used to deliver the supercontinuum light to the end of the light source. Consequently, the light emitted by the light source of this embodiment is spatially coherent, at least for all wavelengths from the first wavelength (370 - 460 nm) to the second wavelength (620 - 780 nm). From the end of the source all these wavelengths may be emitted simultaneously to free space.

Other non-limiting examples of light sources that can be used in the proposed system are, among others:

- A light source comprising a mode-locked laser, such as for example a Titanium-sapphire mode-locked laser, or a $Yb^{3+}$ mode-locked laser, or an $Er^{3+}$ mode-locked laser, among others, and also comprises a nonlinear crystal or a nonlinear optical fiber that is used to double or triple the infrared emission optical frequencies of the light radiation emitted by said mode-locked laser. The light emitted by said nonlinear crystal or a nonlinear optical fiber may be spatially coherent light.
- A light source comprising a spatially coherent superluminescent light emitting diode, known as SLD or SLED.
- A light source comprising a broadband light source, such as an incandescent lamp, a halogen lamp or a white light LED, among others, the broadband light source being configured for emitting spatially incoherent light, the light source also comprising a pinhole for spatially filtering and transforming said spatially incoherent light into spatially coherent light.
- A light source comprising a broadband light source, such as an incandescent lamp, a halogen lamp or a white light LED, among others, the broadband light source being configured for emitting spatially incoherent light, the light source also comprising a single mode optical fiber for transforming said spatially incoherent light into spatially coherent light, the broadband light source being coupled into the single mode optical fiber.
- A light source comprising a nonlinear crystal for generating supercontinuum light.

All the aforementioned sources may be spatially coherent in a broad band of wavelengths in the visible range and emit those wavelengths simultaneously. The light emitted by these sources may propagate naturally in the form of a collimated beam or may be transformed by a collimator, for example a collimator comprising a collimating mirror or a collimating lens or a set of collimating lenses, into a collimated beam. A light source may optionally comprise a collimator.

Optionally, for the cases where the light source does not emit naturally in the form of a collimated beam, the first optical arrangement 200, as is the case in the embodiment of Fig.1, comprises a collimator 205 adapted to transform the spatially coherent light into a collimated beam. In an embodiment, the first optical arrangement has a collimator, and the latter is placed at a distance from the end of the source, said distance corresponding to the focal length of the collimator. In a preferred embodiment where the light source is a fiber optic supercontinuum source, such collimator is placed at a distance from the end of the source corresponding to the focal length of the collimator, such distance measured in the direction of the propagation axis of the optical fiber that delivers the supercontinuum light to the end of the source.

The collimated beam may have a full-angle angular divergence of 0.46 degrees or less for all the wavelengths from the first wavelength to the second wavelength. In a particular embodiment the cited full-angle angular divergence is between 0.01 and 0.20 degrees for all wavelengths from 430 to 780 nm. Likewise, optionally the diameter of a transversal section of the collimated beam, for all the wavelengths from the first wavelength to the second wavelength may be of 5 mm or less at a distance from the collimator 205 corresponding to a focal length of the collimator 205, and wherein the diameter is considered as the $1/e^2$ width of the beam, i.e, the distance between side points in the transversal section of the beam from the central maximum optical intensity point of the transversal section of the beam where the optical intensity is $1/e^2$ times such maximum optical intensity. In a particular embodiment the cited diameter at a distance from the collimator 205 corresponding to a focal length of the collimator 205, is between 2.1 mm and 2.15 mm for all wavelengths from 430 to 780 nm.

Complementary or alternatively, the diameter of a transversal section of the collimated beam, for all the wavelengths from the first wavelength to the second wavelength may be of 10 mm or less at any distance of 1 m or less from a point at the first optical arrangement 200, and/or of 100 mm or less at any distance of 10 m or less from said point at the first optical arrangement 200, wherein said point at the first optical arrangement preferably is at the collimator 205 when/if the first optical arrangement 200 comprises said collimator 205, and wherein the diameter is considered as the $1/e^2$ width of the beam, i.e, the distance between side points in the transversal section of the beam from the central maximum optical intensity point of the transversal section of the beam where the optical intensity is $1/e^2$ times such maximum optical intensity. In a particular embodiment where the first optical arrangement comprises a collimator 205, the cited diameter is between 2.1 mm and 5.3 mm at a distance of 1 m from the collimator, for all wavelengths from 430 to 780 nm, and the cited diameter is between 5 mm and 37 mm for all wavelengths from 430 to 780 nm at a distance of 10 m from the collimator.

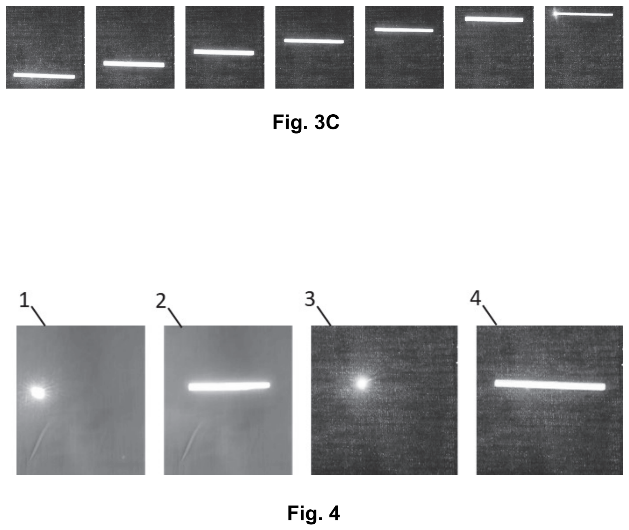

Consequently, in a particular embodiment where the system comprises a collimator, the diameter at $1/e^2$ width of the transversal section of the light beam incident on a sample placed at a distance of 1 m or less from a collimator is of 10 mm or less for all the wavelengths from the first wavelength to the second wavelength, and the diameter at $1/e^2$ width of the light beam incident on a sample placed at a distance of 10 m or less from the collimator, is of 100 mm or less for all the wavelengths from the first wavelength to the second wavelength. In a particular embodiment where the system comprises a collimator, the cited diameter is between 2.1 mm and 5.3 mm at a distance of 1 m from the collimator 205, preferably for all wavelengths from 430 to 780 nm, and the cited diameter is between 5 mm and 37 mm, preferably for all wavelengths from 430 to 780 nm, at a distance of 10 m from the collimator 205. For an illustrative purpose, Figure 4 shows pictures of the light scattered by textile samples when illuminated by the collimated beam of the supercontinuum light source as in (similarly to) an embodiment of the present invention. In the examples related to the pictures in Fig. 4 the value of the diameter (at $1/e^2$) of the transversal section of the beam incident on the samples is of between 2.1 and 5.3 mm for all wavelengths from 430 to 780 nm, and the distance of the samples from the collimating lens is of between 0.95 and 1 m for all positions of the beam in every sample.

The spatial resolution of the system, said spatial resolution being understood as the minimum area of a sample of which the system is able to provide color coordinates and to discriminate them from color coordinates of an adjacent area of the same magnitude, can be assumed to be the area of the light beam incident on the sample corresponding to the beam diameter at a $1/e^2$ width. Consequently, said spatial resolution may be 78.6 mm$^2$ or less for any sample placed at a distance of 1 m or less from a point at or within the first optical arrangement, or may be 78.6 cm$^2$ or less for any sample placed at a distance of 10 m or less from a point at or within the first optical arrangement. In a particular embodiment where the first optical arrangement has a collimator, such spatial resolution is of 22.1 mm$^2$ at a distance of 1 m from the collimator and of 10.7 cm$^2$ at a distance of 10 m from the collimator.

The full angular divergence and the diameter of the collimated beam may have different values if measured in different directions of the plane of the transversal section of the beam. This may be the case for example, for a beam that has a transversal section of an elliptical shape. Hence, in the present invention, preferably the full angular divergence of the beam is the maximum full angular divergence of the beam among those measured in all directions of the plane of the transversal section of the beam. Likewise, in the present invention, preferably the diameter of the beam is the maximum diameter of the beam among those measured in all directions of the plane of the transversal section of the beam. In the optional and preferred case of a beam with a transversal section of circular shape, the angular divergence and the diameter of the beam are equal in all directions of the plane of the transversal section of the beam.

Optionally the beam quality factor $M^2$ of the collimated beam, for all the wavelengths from the first wavelength to the second wavelength, is comprised in a range between 1.0 and 2.0, being 1.0 the value of $M^2$ for a diffraction-limited Gaussian beam, and the minimum physically possible value of $M^2$ by definition, according to ISO Standard 11146 (2005) [ref.3]. Preferably said quality factor $M^2$ is lower than 1.4 for all the wavelengths from the first wavelength to the second wavelength. Optionally and preferably, the brightness of the collimated beam, composed of all the wavelengths from the first wavelength to the second wavelength, is of 1 mW/cm$^2$ or higher at any distance of 1 m or less from a point at the first optical arrangement, and/or of 0.01 mW/cm$^2$ or higher at any distance of 10 m or less from said point at the first optical arrangement, said point preferably being at the collimator when the first optical arrangement comprises said collimator. In a particular embodiment wherein the first optical arrangement comprises a collimator, such brightness is of 136 mW/cm$^2$ at a distance of 1 m from the collimating lens and of 2.8 mW/cm$^2$ at a distance of 10 m from the collimating lens.

At the same time that the sample 300 is illuminated by the collimated beam, the sample 300 can be illuminated by environmental light, or not illuminated at all. Unlike conventional systems configured to measure color of an area using optical spectrometers (spectrophotometers), (where environmental light must be avoided to obtain a proper measurement of color), in the system of the present invention the measurement of color is immune to simultaneous illumination from environmental light (thus, the measurement can be done in spaces open to surrounding illumination). A contributing reason for this is the optional high brightness of the beam incident on the sample, in general much higher than the brightness of environmental illumination incident on the sample.

Referring to the embodiment Fig. 1, the first optical arrangement 200 also includes a first optical device 203, such as an XY galvanometer mirror. Said first optical device 203 is configured to change and dynamically orient a direction of the collimated beam towards the sample 300 performing a scan of an area of the sample 300, part-by-part.

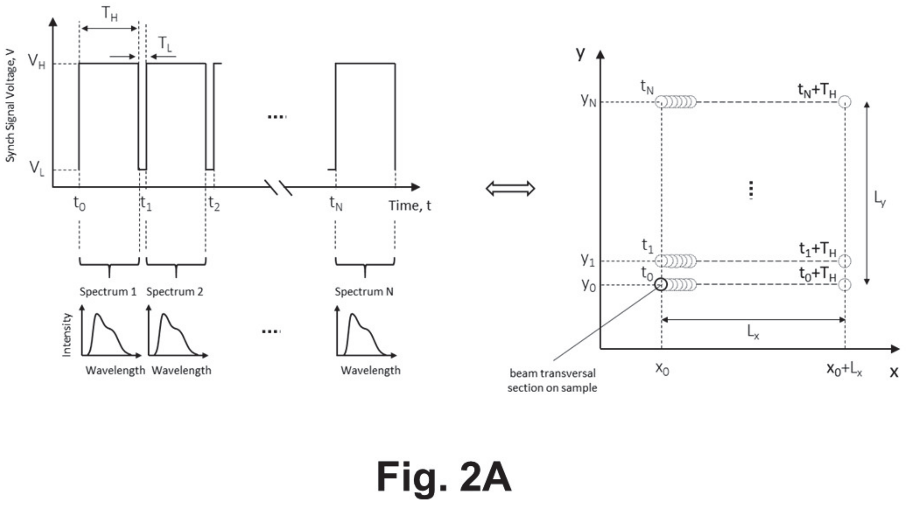

As referred above, an area of the sample 300 is preferably scanned line-by-line. A more complete description of said line-by-line scanning process in an embodiment is as follows: as illustrated in Figure 2A (right side of the figure), the collimated beam is oriented dynamically with the optical device 203 to impinge sequentially on different points of the sample. In Figure 2A (right side of the figure) the positions of said points on the sample are represented with their corresponding coordinates (x,y). Sequentially, the beam is oriented from a position $(x_0,y_0)$ to a position $(x_0 + L_x,y_0)$. This is understood as the scanning of a first line of length $L_x$. Next, the beam is oriented sequentially from a position $(x_0,y_1)$ to a position $(x_0 + L_x,y_1)$, performing the scanning of a second line. Progressively, continuing this procedure, the sample is scanned with other lines (each one of arbitrary number n), from a position $(x_0,y_n)$ to a position $(x_0 + L_x,y_n)$, until a complete area of the sample, of sides of lengths $L_x$ and $L_y$, is scanned.

Optionally, said scanning of an area can be performed by scanning only one single line. In practise, scanning a line may be performed illuminating one single point or spot of the sample, because the beam cross section or spot has a finite size. Therefore, the minimum area that can be scanned may be the area of the transversal section of the beam incident on the sample, which would correspond to the spatial resolution of the system as described above.

Refereeing to Fig. 1, the second optical arrangement 500 is configured to collect light scattered from the sample upon illumination of the sample with the collimated beam. For the purpose of collecting scattered light, the second optical arrangement 500 comprises a second optical device 503 and an optical element 504 which are configured as follows: The second optical device 503 is configured to receive light scattered by the sample at an angle of observation relative to a direction of a specular component reflected from the sample upon the incidence of the collimated beam on the surface of the sample. Said second optical device 503 is further configured to redirect the received scattered light towards the optical element 504. Also, said second optical device 503 is configured to, in synchronization with the first optical device 203,

change and dynamically orient a direction of propagation of the redirected scattered light such that during the scanning of the area of the sample 300 said direction of propagation of the redirected scattered light remains constant with respect to the optical element 504. In the preferred embodiment of Fig. 1, said optical element 504 is an off-axis parabolic mirror, and the second optical device 503 comprises a galvanometer mirror.

The optical spectrometer 400 is configured to measure an optical spectrum of the collected scattered light, i.e. the scattered light collected by the second optical arrangement 500, for each scanned part of the area. For this purpose, in the preferred embodiment of Fig. 1, the optical element 504 is configured to receive the scattered light redirected by the second optical device 503, and to further redirect it towards an input of the optical spectrometer 400.

The computing device runs/implements one or more algorithms that determine color coordinates of the area of the sample 300 in a given color space by computing an overall optical spectrum that preferably is an average optical spectrum. To do so, preferably all the optical spectra corresponding to all scanned parts are averaged and the XYZ Tristimulus values corresponding to the average optical spectrum are calculated. Optionally, the system may determine the color coordinates from a single scanned or illuminated part of the sample.

Therefore, the proposed system measures color using a collimated spatially coherent illuminating source allowing localized illumination at long distances, by pointing (or directing) the illuminating light with the cited first optical device 203, that in a particular embodiment is composed of a pair of x,y movable galvanometer mirrors, but can be otherwise a rotating polygonal mirror, an acousto-optic deflector, or an electro-optic deflector based in propagation of light in a nonlinear crystal, among others. Thus, it is possible to scan large areas of a sample 300 with the first optical device 203 at fast speed. In the proposed system, such area may for example range from $22\,mm^2$ to $2.25\,m^2$ (e.g. a square area of 1.5 m x 1.5 m). The total scanning time of such area may for example range from 0.1 ms to 1000 s.

To measure the color of a given area of the sample 300, the scanning of said area is synchronized with the recording by the optical spectrometer 400 of the optical spectra for the area's parts, and the recording of the optical spectrum of each part lasts an optical spectrum integration time that is equal to the duration of the scan of said part by the first optical device 203. The area is scanned part-by-part, as described above. For each part, the spectrometer 400 records one spectrum that corresponds to the scattered light collected during the time that it takes the first optical device 203 to scan such part (i.e. the spectrometer integration time to record a spectrum matches the scanning time of a part). Preferably, during the time that it takes the first optical device 203 to move to the first point of next part to be scanned, called time of flight, the spectrometer 400 remains passive. When next part is scanned, the spectrometer 400 records a new spectrum, and so on until every part of the scanned area has a corresponding spectrum recorded by the spectrometer 400.

Figure 2A illustrates a graphical explanation of a non-limiting example of the procedure of synchronization between sample scanning and optical spectra recording in an embodiment where the area is scanned line-by-line, and said example is as follows: A squared voltage signal (represented as function of time in left side (up) in Figure 2A) is used to synchronize scanning and spectrum recording times. This voltage signal feeds the sync input port of the first optical device 203 and the sync input port of the spectrometer 400 simultaneously. When the signal changes from low state voltage, $V_L$, to high state voltage, $V_H$, (rise trigger event), the movement of the first optical device 203 to scan a line and the spectrum recording begin simultaneously. This rise trigger event occurs at time $t_n$ for each scanning line of arbitrary number n, from n=0 to n=N. During high state of the signal (integration time $T_H$), the first optical device 203 scans a line on the sample, from point $(x_0,y_n)$ to point $(x_0 + L_x,y_n)$, and the spectrometer 400 records a spectrum n, integrating the photodetected signal produced by all the scattered light collected by the second optical device 500 during the integration time $T_H$.

When the signal changes from high state voltage to low state voltage (fall trigger event) the movement of the first optical device 203 to translate the collimated beam to the first point of the next line begins, and the spectrometer 400 stops the spectrum recording. During the low state of the signal (time of flight $T_L$), the first optical device 203 translates the collimated beam to the first point of the next line, and the spectrometer 400 remains passive. This procedure is repeated sequentially until all lines of the area from n=0 to n=N are scanned and a spectrum n for each line n is recorded. A computing device operatively connected with the spectrometer performs a statistical calculation, thereby calculating an overall spectrum, using all or a few of the spectra corresponding to all lines, and preferably said computing device calculates an average spectrum by averaging all the spectra corresponding to all lines.

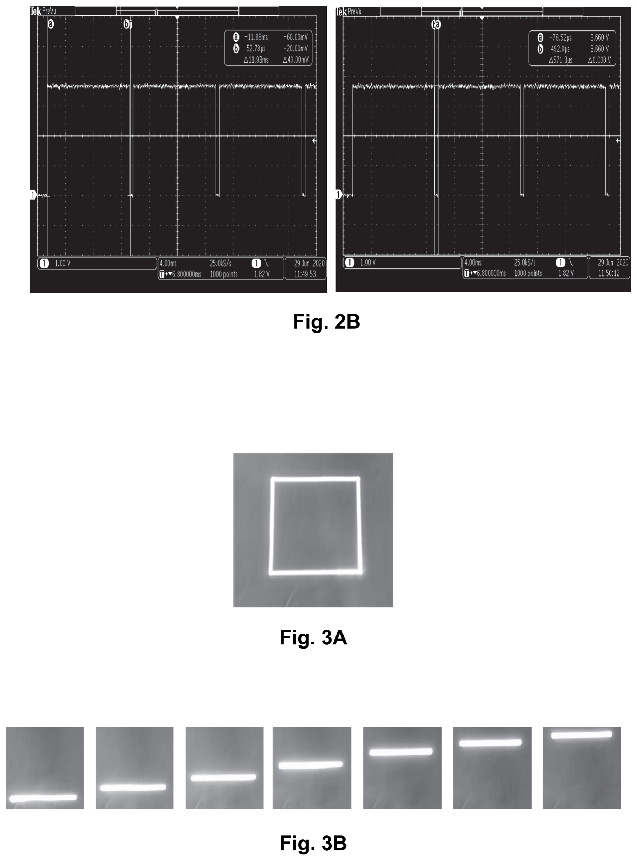

Fig. 2B shows an oscilloscope trace of an example of voltage signal for synchronization between a galvanometer scanner and an optical spectrometer in an embodiment of the present invention, where the integration time $T_H$ is 11.93 milliseconds and the time of flight $T_L$ is 571.3 microseconds.

In an embodiment, for the purpose of calculating the color of the sample 300, there are measured: the spectrum of scattered light from the sample 300, and also the spectrum of scattered light from a white reference. Thus, in an embodiment, the procedure explained above is performed to obtain the average spectrum of scattered light of an area of the sample 300 and also to obtain the average spectrum of scattered light of a white reference. Most preferably the white reference is placed at the same distance from the system, as the sample 300.

Likewise, most preferably the white reference's scanned area is of the same magnitude as the sample's scanned area. Preferably, the white reference is measured before measuring the sample.

Advantageously, best accuracy in the determination of color is obtained in the preferred case that the full dynamic range of the spectrometer 400 is exploited when recording the spectra of the white reference and of the sample 300. Such full dynamic range may be obtained when the spectrometer's integration time for recording an optical spectrum is set to be equal to the maximum optical spectrum integration time for which the spectrometer response, and therefore the recorded optical spectrum, is not saturated at any wavelength. In an embodiment of the proposed method, the maximum optical spectrum integration time is determined before saturation, as follows: the first optical device 203 is configured/programmed to continuously scan a portion, preferably a perimeter, of an area of a white reference, similarly to what is illustrated in Figure 3A. Simultaneously, the spectrometer 400 is configured/programmed to record spectra with different integration times, which are increased progressively and discretely with a certain constant time difference. The maximum of these integration times for which its corresponding recorded spectrum is not saturated at any wavelength is set as the integration time for the recording of the reference spectra and of the sample spectra, and is set correspondingly as the time in high state voltage of the synchronizing signal between scanner and spectrometer (integration time $T_H$), referred above and illustrated in figure 2A.

This determination of the integration time is made with the white reference because the latter will scatter a higher proportion of intensity than the sample 300, thus the spectrometer 400 will not be saturated by the scattered light from the sample 300 if it is not saturated by the scattered light from the white reference, provided the integration time is the same for both cases.

The required integration time $T_H$ determined as referred above may decrease with the brightness of the collimated beam. As an example, the integration time $T_H$ may be inversely proportional to the brightness of the collimated beam. As an example, in an embodiment where an integration time $T_H$ is of 1622.48 ms for a brightness of the collimated beam of 1mW/cm$^2$ (said brightness composed of all wavelengths from 430 to 780 nm and measured at a distance of 1 m from a collimator 205), said integration time $T_H$ is of 11.93 ms for a value of said brightness of 136 mW/cm$^2$.

In an embodiment, the XYZ Tristimulus values are calculated by performing the following steps:

- Step 1. Measurement of spectra:

    ◦ Measurement of the spectrum of an area of the white reference, obtained with the synchronous procedure explained above.
    ◦ Measurement of the spectrum of the background, recorded during the integration time $T_H$ determined as explained above. The background is the noise recorded by the spectrometer that is produced by detected environmental light and/or by intrinsic electrical noise of the spectrometer. The background spectrum is recorded having the illuminating collimated beam switched off or blocked (e.g. with an electromechanical shutter that is optionally comprised by the system) at a point that is at the light source, or in between the light source and the sample, or in between the first optical device 203 and the light source.
    ◦ Measurement of the spectrum of an area of the sample 300, obtained with the synchronous procedure explained above. The area of the sample and the area of the white reference are equal, and are placed at the same distance from the end of the illuminating source.

- Step 2. Calculation of the reflectance curve of the area of the sample 300: Herein, the reflectance curve R($\lambda$) is considered to be a spectrum that represents, in percentage (%), the quantity of light reflected by the area of the sample 300 at each wavelength $\lambda$, said reflected light containing the scattered light from the area of the sample and also the specular component reflected from the area of the sample, if/when said specular component is present. The reflectance curve of the area of the sample 300 is calculated by the computing device as follows:

$$R(\lambda)(\%) = \frac{I(\lambda) - B(\lambda)}{W(\lambda) - B(\lambda)} \cdot 100 \qquad (eq.1)$$

where W($\lambda$) is the spectrum of the area of the white reference, I($\lambda$) is the spectrum of the area of the sample and B($\lambda$) is the spectrum of the background, measured as referred above, all expressed in the same units (e.g. spectrometer counts, optical power or spectral power density, among others).

- Step3: Calculation of the tristimulus values X, Y, Z: From the reflectance curve of the area of the sample 300, the tristimulus values X, Y and Z of said area of the sample 300 are calculated by the computing device using the following standard expressions, established by the CIE - International Commission on Illumination [ref. 4, ref. 5]:

$$X = k \int_{\lambda_1}^{\lambda_2} S(\lambda)\, \bar{x}(\lambda)\, R(\lambda)\, d\lambda \qquad Y = k \int_{\lambda_1}^{\lambda_2} S(\lambda)\, \bar{y}(\lambda)\, R(\lambda)\, d\lambda \qquad Z = k \int_{\lambda_1}^{\lambda_2} S(\lambda)\, \bar{z}(\lambda)\, R(\lambda)\, d\lambda \quad (eq.2)$$

$$k = \frac{100}{\int_{\lambda_1}^{\lambda_2} S(\lambda)\, \overline{y}(\lambda)\, d\lambda} \qquad \text{(eq. 3)}$$

where $S(\lambda)$ is the normalized spectrum of a CIE standard illuminant (i.e. the theoretical spectrum of a type of light source established as standard by the CIE). Examples of CIE standard illuminants are A - incandescent, D65 - daylight and F2 - fluorescent, among others. $\overline{x}(\lambda), \overline{y}(\lambda), \overline{z}(\lambda)$ are the tristimulus spectral responses of a CIE standard observer, which represent how an average person sees color across the visible spectrum. Different CIE standard responses for $\overline{x}(\lambda), \overline{y}(\lambda), \overline{z}(\lambda)$ are known as 2° Observer (CIE 1931) and 10° Observer (CIE 1964). $\lambda_1$ and $\lambda_2$ correspond to a first wavelength (ranging preferably from 370 to 460 nm) and to a second wavelength (ranging preferably from 620 to 780 nm), respectively. k is a normalizing constant.

The X, Y, Z values related to the reflectance of the area of the white reference, named $X_n$, $Y_n$, $Z_n$, are calculated as well with the above equations using the same CIE standard illuminant and same CIE standard observer, or alternatively may be considered as given or predetermined properties of the white references.

- Step 4: Calculation of the color coordinates in a color space, such as CIEXYZ, CIE L*a*b*; CIE L*Ch or HUNTER Lab, among others. As an example, in the case of the CIE L*a*b* space, coordinates L*, a* and b* of the area of the sample are calculated by the computing device, using the following expressions:

$$L^* = 116\,(Y/Y_n)^{1/3} - 16 \qquad \text{(eq. 4a)}$$

$$a^* = 500\left[(X/X_n)^{1/3} - (Y/Y_n)^{1/3}\right] \qquad \text{(eq. 4b)}$$

$$b^* = 200\left[(Y/Y_n)^{1/3} - (Z/Z_n)^{1/3}\right] \qquad \text{(eq. 4c)}$$

Some details of an example of the aforementioned procedure to obtain the color coordinates of an area of a textile sample, are as follows: Said example concerns an embodiment wherein the first optical arrangement comprises a collimator, galvanometer mirrors and an electromechanical shutter. In said example, the sample is illuminated by the collimated beam of a fiber optic supercontinuum source, that, in the visible range, emits simultaneously a band of wavelengths from 430 to 780 nm. In said example, the optical spectra are recorded by a commercial optical spectrometer, model OCEAN-HDX-VIS-NIR, from the company OceanInsight. The following parameters are considered in said example: area of the sample: 10x10 cm$^2$; distance of the sample from the collimating lens: in the range from 0.95 to 1 m for all positions of the beam in the area of the sample; visible spectrum range: 430-780 nm; brightness of the collimated beam (composed of all wavelengths from 430 to 780 nm) at a distance of 1 m from the collimating lens: 136 mW/cm$^2$; spectrum integration time, $T_H$: 11.93 ms; time of flight, $T_L$: 0.57 ms; number of scanned lines: 50; scanning time of the total area: 0.62 s. In the same example, the computing device is configured to determine color coordinates of the area of the sample for CIE standard illuminants A, B, D50, D65, F2; CIE standard observers 2° and 10°; standard color coordinates spaces CIEXYZ, CIEL*ab; CIEL*Ch; HUNTERLab; and to determine standard ASTM E313 Whiteness and Yellowness Indices;

In said example, first, the perimeter, similar to the one shown in Fig. 3A, of the area of a textile white reference is illuminated for the determination of the spectrum integration time $T_H$, which results in a value of $T_H$ =11.93 ms. Next, in the same example the area of the white reference is scanned line-by-line, similarly to what is illustrated by Fig. 3B where 7 lines of a total of 50 are shown. The time to perform the complete scan of each line corresponds to the integration time $T_H$ of 11.93 ms, and the time of flight $T_L$ (time that the scanning galvanometer mirrors take to translate the collimated beam from the last point of one line to the first point of the next line) is of 0.57 ms. Simultaneously, in the same example the spectrometer records a spectrum for each scanning line. Next, in the example the illuminating beam is blocked with an electromechanical shutter placed between the collimator and the galvanometric mirrors, and the background spectrum is recorded. Next, the area of the textile sample of which the color coordinates are to be obtained is scanned line-by-line, similarly to what is illustrated in Fig. 3C.

In this example, conditions of integration time $T_H$, time of flight $T_L$, number of lines, area of the sample and position of the sample relative to the end of the collimator and to the galvanometer mirrors are the same as in the previous scanning procedure of the white reference. Simultaneously, in the example the spectrometer records a spectrum for each scanning line.

Next, in the example the computing device calculates the average spectrum of the 50 lines of the white reference and the average spectrum of the 50 lines of the textile sample. Finally, following equations eq. 1- eq. 4a,4b,4c referred above, in the example the computing device calculates a reflectance curve and, from said reflectance curve, calculates the color coordinates of the area of the sample.

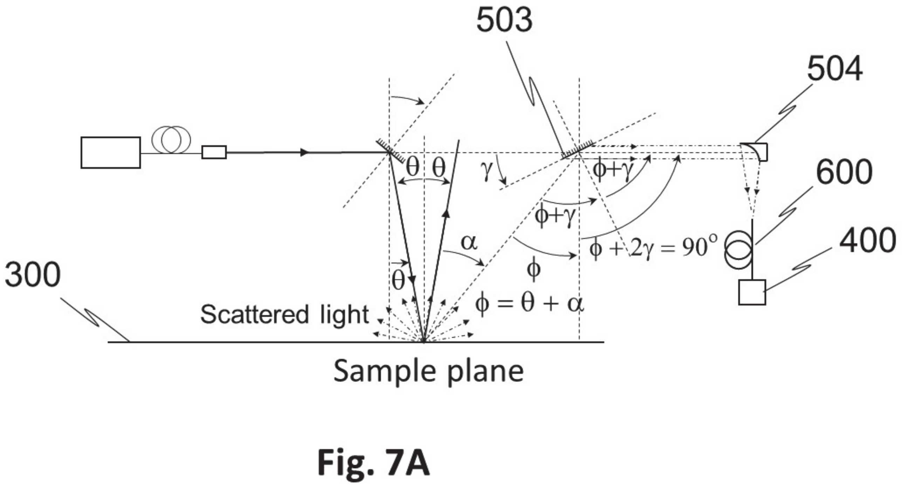

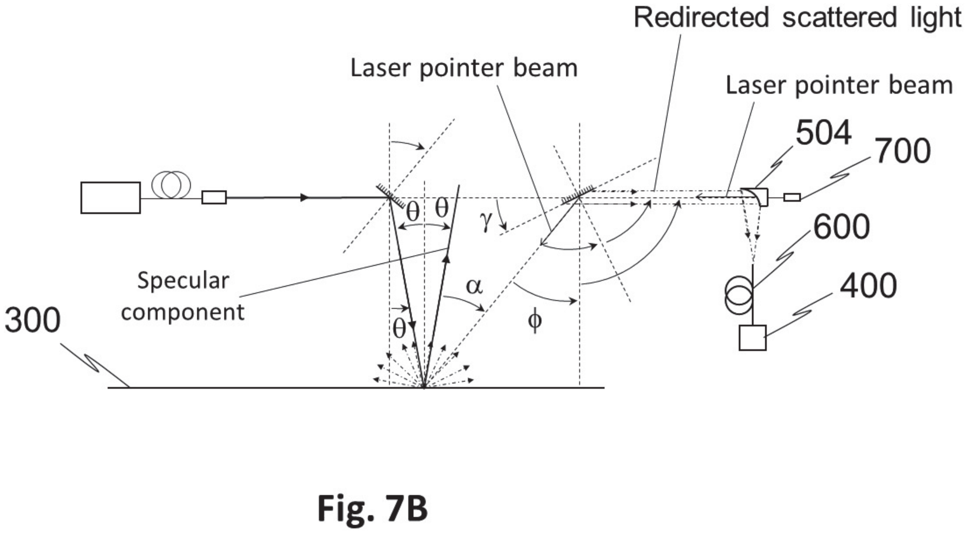

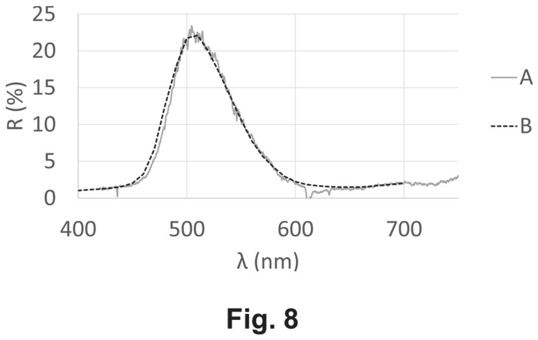

To further evaluate the utility of the present invention to determine color coordinates of areas of samples made of arbitrary materials, the procedure explained above has been followed to calculate the color coordinates of samples of aluminum sheets coated with painting pigments, which are manufactured, e.g., through coil coating techniques. As an example, an aluminum sheet coated with a green painting pigment was studied using the same measurement procedure as the one explained further above for a textile sample. In said example concerning the aluminum sample, there are the following parameters: area of the sample: 13x13 mm$^2$; distance of the sample from the collimating lens: in the range from 0.95 to 1 m for all positions of the beam in the area of the sample; visible spectrum range: 420-750 nm; spectrum integration time, $T_H$: 1.55 ms; time of flight, $T_L$: 0.07 ms; number of lines: 6; scanning time of the total area: 9.72 ms. In this example, the first optical device and the second optical device of the embodiment of the invention are galvanometer mirrors. The first galvanometer mirrors (first optical device) scan the area of the sample by changing and dynamically orienting the direction of the collimated beam about a central direction which is normal to the surface of the sample (angle of incidence $\theta$ about 0°). The second galvanometer mirrors (second optical device) receives the scattered light from the surface at an angle of observation $\alpha$ about 45° and, in synchronization with the first galvanometer mirrors, redirect the received scattered light and change and dynamically orient the direction of propagation of said redirected scattered light such that during the scanning of the area of the sample said direction of propagation remains constant and parallel to the flat surface of the sample. This redirected light is received by an off-axis parabolic mirror and focused into a multimode fiber that guides the light to the input of the optical spectrometer (similarly to as shown in Fig. 7A and 7B). Fig. 8 illustrates the reflectance spectrum (curve A) obtained from this procedure used for measuring the coated aluminum sample, and also illustrates the theoretical reflectance spectrum (curve B) provided by the manufacturer of the sample for an angle of incidence $\theta = 0°$ and an angle of observation $\alpha = 45°$ (standard geometry to measure color, known in the field as 0/45). In Fig. 8 the reflectance R (%) is shown as a function of the wavelength $\lambda$ (nm). As shown in Fig. 8 the experimental procedure followed achieves measuring correctly the expected reflectance spectrum of the sample under geometry 0/45. From the reflectance spectrum obtained, color coordinates of the area of the aluminum sample studied, in the CIE L*a*b* color space, for illuminant D50, observer 2°, are calculated as L* =37.88, a* = -53.39, b* = 20.71.

In some embodiments, the reference spectrum may be a reference overall optical spectrum.

The latter preferably is calculated similarly to calculating the overall optical spectrum of the sample. Therefore, in an embodiment the method applied for calculating the overall optical spectrum of the area of the sample, is applied on a reference sample, e.g. on a white reference sample, for calculating an overall reference optical spectrum.

The utility of the invention referred herein to measure the color of areas of samples can be applied to multiple purposes, such as quality inspection in manufacturing processes, development of painting materials, industrial sorting, material inspection for recycling or classification, among others. In a non-limiting example, the present invention is used to discriminate samples on account of their difference in color. In the latter example, color coordinates of two samples may be calculated in the CIE L*a*b*; CIE L*Ch and HUNTER Lab.

The ASTM E313 Yellowness parameter may be calculated as well for both samples.

Particularly, their color coordinates calculated in the CIE L*ab space may be positioned in a graphical representation of the CIE L*ab space (L*, a, b axis). In the example, color difference between both samples may be represented by values of $\Delta$L, $\Delta$a, $\Delta$b and $\Delta$E, where $\Delta E = \sqrt{(\Delta L)^2 + (\Delta a)^2 + (\Delta b)^2}$ . It should be clarified that notation for parameters L*, a*, b* and $\Delta$E* throughout the present text can be referred equally as L, a, b, and $\Delta$E, respectively (without the symbol *).

Figure 4 shows pictures of the light scattered by textile samples when illuminated by the collimated beam of a supercontinuum light source, similarly as in an embodiment of the present invention, wherein in said embodiment the first optical arrangement comprises a collimator, and the beam transversal section diameter ($1/e^2$) on the samples is between 2.1 and 5.3 mm for all wavelengths from 430 to 780 nm. In the same embodiment, the distance of the samples from the collimating lens is between 0.95 and 1 m for all positions of the beam in the sample.

From left to right in Fig. 4: 1) Static incidence of the beam on a white reference textile sample; 2) Dynamic incidence of the beam on the same white reference textile sample, scanning a line of 10 cm length during a time (integration time $T_H$) of 11.93 ms; 3) Static incidence of the beam on a textile sample under test (to obtain its color coordinates); 4) Dynamic incidence of the beam on the same textile sample under test, scanning a line of 10 cm length during a time (integration time $T_H$) of 11.93 ms.

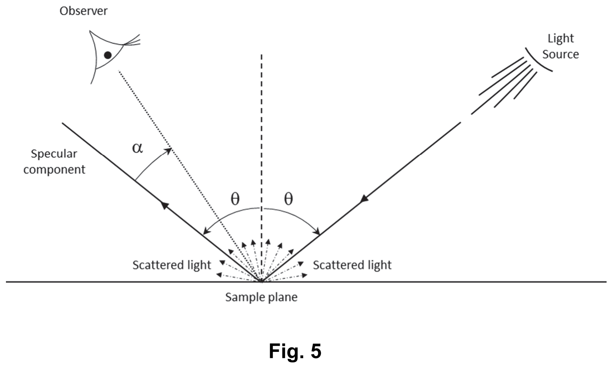

With regard to Fig. 5, therein it is shown a principle of operation of many color measuring systems. As known, the color of a sample perceived by an observer may depend on the relative orientation between illuminating source, sample and observer. The same sample, illuminated by the same light source and observed by the same observer may be perceived to be of a different color from one observation to another if the angle of incidence and/or the angle of observation from the direction normal to the sample change(s) from one observation to the other. This effect may be particularly relevant in the case of partially reflective samples, where the specular component of the light reflected by the sample may hide the "real" color of the sample. Figure 5 illustrates this effect, where $\theta$ is the angle of incidence of the light (i.e, the angle formed between the direction of propagation of the illuminating light and the direction normal to the sample plane). The angle of reflection of the specular component is equal to $\theta$, while the scattered light from the sample is propagated in all directions. Information of the "real" color of the sample is carried by the scattered light. Hence, to perceive the "real" color of the sample, the observer should preferably move away from the $\theta$ direction, and move to an angle $\alpha$ (angle of observation relative to the direction of the specular component.) The higher $\alpha$, the less intensity of specular component is received by the observer.

In standard previously known systems for measuring color, the illuminating source and the observer are situated at $\theta = 0°$ and $\alpha = 45°$, respectively (configuration 0/45), to minimize the effect of the specular component. These previously known systems, however, miss the valuable information of color values perceived at other angles of observation, which is highly appreciated in different industrial sectors, like the automotive. Systems that offer the capability of measuring color at different angles of observation are called "multiangle". In known multiangle systems to measure color, the number of angles of observation is discrete and limited, they require several sources of illumination placed in different positions and several receptors placed in different positions. Besides, the area of illumination in known systems is of few cm$^2$.

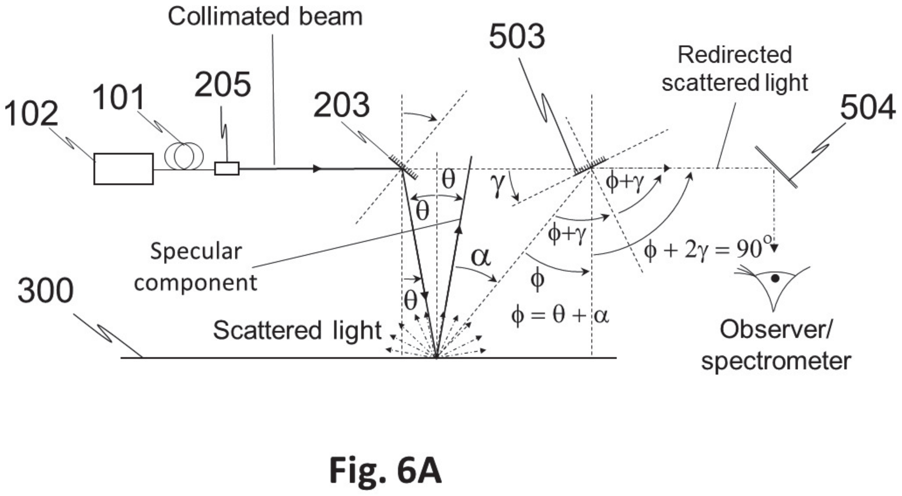

Fig. 6A shows an embodiment of the invention which is useful for illustrative purposes. In Fig. 6A the first and second optical devices 203, 503 are galvanometer mirrors (galvanometers), whose axes of rotation are parallel to each other. Therefore, the direction of propagation of the collimated beam and the direction of propagation of the scattered light that is received by the optical element 504 lay on the same plane. In the embodiment of Fig. 6A the surface of the sample 300 is flat and parallel to a straight line between the axes of rotation of the galvanometer mirrors. Also referring to Fig. 6A, the direction of propagation of the redirected scattered light received by the optical element 504 from the second galvanometer mirror 503 is parallel to the surface of the sample (sample plane). The invention may achieve that this direction remains constant while the first galvanometer 203 scans the sample. Therefore, while the first galvanometer rotates to scan the sample, the second galvanometer may rotate to keep said direction constant. The relative angular geometry between the mirrors to keep said direction constant and parallel to the surface of the sample is represented in Fig. 6A. As is also shown in Fig. 5, $\theta$ is the angle of incidence of the light, determined by the angle of rotation of the first galvanometer mirror. The angle of reflection of the specular component is equal to $\theta$ and $\alpha$ is the angle of observation relative to the direction of the specular component. When $\theta$ changes, the point of illumination in the sample changes. Therefore $\alpha$, that is determined by the fixed position of the second mirror, changes correspondingly. Referring to Fig. 6A, if $\gamma$ is the rotation angle of the second galvanometer relative to the straight line between the rotation axes of the galvanometer mirrors, then, to keep the direction of propagation of the redirected scattered light received by the optical element parallel to the surface, $\theta$, $\alpha$ and $\gamma$ should keep the following angular relation: $\theta + \alpha + 2\gamma = 90°$. In the embodiment of Fig. 6A, during the scanning of the area of the sample for the measurement of its color coordinates, the second galvanometer mirror is synchronized with the first galvanometer mirror to maintain said angular relation.

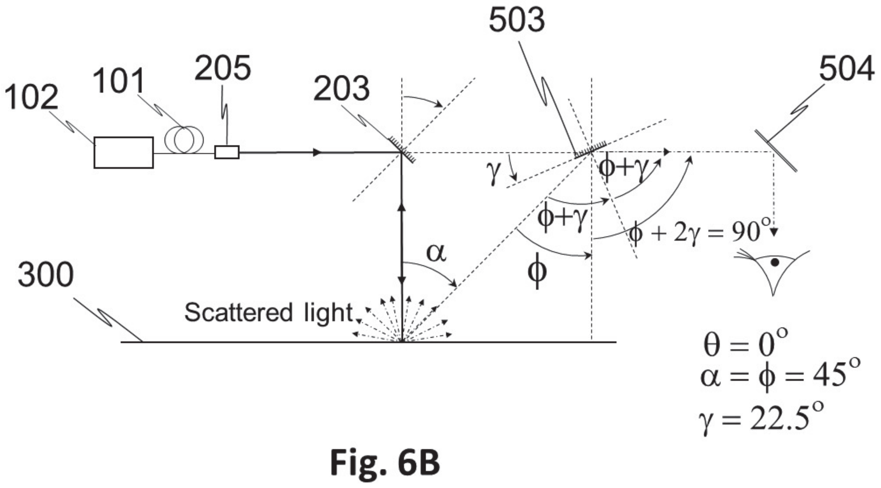

Fig. 6B shows an embodiment which is similar to the embodiment of figure 6A. In Fig. 6B, the angle of incidence of the light $\theta$ is 0° and the angle of observation relative to the direction of the specular component $\alpha$ is 45°. The embodiment of Fig. 6B is a preferred one, because with it the color coordinates of the area of the sample are calculated for the geometry known as 0/45, which is a standard geometry that is accepted widely by the industry and the users of color measurement instrumentation.

As Fig. 6A and Fig. 6B illustrate, compared to state-of the art instruments to measure the color of an area of a sample, the present invention brings the advantage that the observer (spectrometer) may remain in a fixed position relative to the positions of the optical element and of the output of the light source while the illumination angle $\theta$ and the observer angle $\alpha$ change with time. Remaining in said fixed position the observer (spectrometer) may always receive scattered light from the sample in the same reception direction. Therefore, the scattered light that is received by the observer/spectrometer to determining the color of the sample may always be received by the observer/spectrometer in the same reception direction.

Consequently, the system of the present invention to measure the color of an area of a sample may advantageously be a multiangle system that may provide a plethora of angles of illumination and of angles of observation, preferably continuously varied, more preferably using a single source of illumination placed at a fixed single position and also a single receptor (preferably a spectrometer) placed at a fixed single position.

Fig. 7A shows another preferred embodiment which is similar to the one in Fig. 6A. In the embodiment of Fig. 7A, the optical element 504 is an off-axis parabolic mirror and the direction of propagation of the scattered light that is redirected by the second galvanometer mirror is parallel to the principal optical axis of the off-axis parabolic mirror. Further, the scattered light received by the off-axis parabolic mirror is focused by the off-axis parabolic mirror into the input end of an optical fiber 600, which preferably may be a multimode optical fiber. In the embodiment of Fig. 7A, said fiber 600 is fixed at specific position which does not need to change when the illumination angle $\theta$ and the angle of observation $\alpha$ change. The optical fiber 600 delivers the focused light to the input of an optical spectrometer 400. In a non-limiting example, the system is similar to the one shown in Fig. 7A, and some details of this example are the following: the optical element is a 90° off-axis parabolic mirror MPD149-M01 from the company Thorlabs GmbH, with diameter of 25.4 mm and reflected focal length of 101.6 mm; the optical fiber is a multimode fiber QP600-2-VIS-NIR from the company Ocean Optics Inc., with a core diameter of 600 um; the spectrometer is an OCEAN-HDX-VIS-NIR spectrometer from the company Ocean Optics Inc.;

and the galvanometer mirrors are of the model © SCANLAB 7mm Scan Kit AIO from the company SCANLAB GmbH, with a scanning range of ± 0.42 rad.

Fig. 7B shows a variant of the configuration of the embodiment of Fig. 7A. In the embodiment of Fig. 7B the off-axis parabolic mirror has a through hole which is coaxial to the principal optical axis of the parabolic mirror and where a laser pointer 700 is included. In the embodiment of Fig. 7B, the beam of the laser pointer 700 propagates through the coaxial hole in the opposite direction of the direction of propagation of the scattered light that is redirected by the second galvanometer. In the embodiment of Fig. 7B, the function of this laser pointer is to control that the rotation angle $\gamma$ of the second galvanometer mirror is such that a condition is achieved, said condition being that the scattered light redirected by the second galvanometer is always parallel to the principal optical axis of the off-axis parabolic mirror. Since, as shown in Fig. 7B, the beam of the laser pointer propagates through the same optical path than the redirected scattered light but in opposite direction, said condition occurs when the beam of the laser pointer points at the point of incidence of the collimated beam of the light source on the sample. In a non-limiting example, said off-axis parabolic mirror is a 90° off-axis parabolic mirror MPD249H-M01 from the company Thorlabs GmbH, with diameter of 50.8 mm and reflected focal length of 101.6 mm

While the foregoing is directed to embodiments of the present invention, other and further embodiments of the invention may be devised without departing from the basic scope thereof.

For example, other aspects may be implemented in hardware or software or in a combination of hardware and software.

Additionally, the software programs included as part of the invention may be embodied in a computer program product that includes a computer useable medium, for example, a readable memory device, such as a hard drive device, a flash memory device, a CD-ROM, a DVD/ROM, or a computer diskette, having computer readable program code segments stored thereon.

The computer readable medium can also include a communications link, either optical, wired, or wireless, having program code segments carried thereon as digital or analog signals.

The scope of the present invention is defined in the following set of claims.

Non-patent References

[ref. 1] C. K. Hitzenberger, M. Danner, W. Drexler and A. F. Fercher, "Measurement of the spatial coherence of superluminescent diodes," Journal of Modern Optics, 46:12, 1763-1774 (1999).

[ref. 2] K. Saastamoinen, J. Tervo, J. Turunen, P. Vahimaa, and A. T. Friberg, "Spatial coherence measurement of polychromatic light with modified Young's interferometer," Optics Express, 21:4, 4061-4071 (2013).

[ref. 3] ISO Standard 11146, "Lasers and laser-related equipment - Test methods for laser beam widths, divergence angles and beam propagation ratios" (2005)

[ref.4] COLORIMETRY - PART 3: CIE TRISTIMULUS VALUES, ISO/CIE 11664-3:2019(E) http://cie.co.at/publica tions/colorimetry-part-3-cie-tristimulus-values-2

[ref. 5] CIE 1931 color space, article in Wikipedia, https://en.wikipedia.org/wiki/CIE 1931 color space

**Claims**

1. A system to measure the color of an area of a sample, comprising:

   a light source (100) configured to emit light to illuminate a sample (300);
   a first optical arrangement (200) configured to receive said light, to output and direct a collimated beam of said light towards a surface of the sample (300) located at a given distance, the first optical arrangement (200) comprising a first optical device (203) configured to change and dynamically orient a direction of the collimated beam towards the sample (300) thereby scanning an area of said sample (300), part-by-part;
   a second optical arrangement (500) which, upon illumination of the sample with the collimated beam, is configured to collect light scattered from the sample, the second optical arrangement (500) comprising a second optical device (503) and an optical element (504), wherein the second optical device (503) is configured to receive light scattered by the sample at an angle of observation ($\alpha$) relative to a direction of a specular component reflected from the sample upon the incidence of the collimated beam on the surface of the sample, and said second optical device (503) is further configured to redirect the received scattered light towards the optical element (504),

and wherein said second optical device (503) is further configured to, in synchronization with the first optical device (203), change and dynamically orient a direction of propagation of the redirected scattered light such that during the scanning of the area of the sample (300) said direction of propagation of the redirected scattered light remains constant with respect to the optical element (504);

an optical spectrometer (400) configured to receive the collected, by the second optical arrangement (500), scattered light and to record an optical spectrum of said collected scattered light for each part; and

a computing device operatively connected to the optical spectrometer (400);

wherein:

the light emitted by the light source (100) comprises a spectrum of wavelengths which are emitted simultaneously, and said spectrum covers, continuously, at least a band of wavelengths within the visible range, from a first wavelength to a second wavelength;

the light emitted by the light source (100) being spatially coherent, at least for all the band's wavelengths from the first wavelength to the second wavelength;

the first optical arrangement (200), for outputting the collimated beam, is configured to preserve collimated said spatially coherent light if the latter is collimated, or said optical arrangement (200) further comprises a collimator (205) to perform a collimation of the spatially coherent light;

the computing device is configured to determine color coordinates of the area of the sample (300) in a given color space, by means of computing an overall optical spectrum from a statistical calculation over all or some of the optical spectra corresponding to all or some of the scanned parts of the area, and by analyzing the overall optical spectrum, said analyzing comprising calculating the XYZ Tristimulus values corresponding to said overall optical spectrum;

wherein the first wavelength is comprised in a range between 370 nm and 460 nm, and the second wavelength is comprised in a range between 620 nm and 780 nm.

2. The system of claim 1, wherein when the first optical device (203) scans the area, the scanning of said area is synchronized with the recording by the optical spectrometer (400) of the optical spectra for the parts of the area.

3. The system of claim 1 or 2, wherein the direction of propagation of the redirected scattered light is parallel to a principal optical axis of the optical element (504), preferably said optical element (504) being an off-axis parabolic mirror.

4. The system of any of the previous claims, wherein the angle of observation ($\alpha$) is about 45 degrees, and wherein the first optical device (203) is further configured to, during the part-by-part scanning of the area of the sample, change and dynamically orient the direction of the collimated beam about a central direction which is normal to the surface of the sample.

5. The system of any of the previous claims, wherein the first optical device (203) and the second optical device (503) comprise respective galvanometer mirrors; the second optical arrangement further comprises an optical fiber optically coupled to the optical spectrometer (400); and the optical element (504) is configured to receive the scattered light redirected by the second optical device (503) and to further redirect it towards an input of the optical fiber.

6. The system of any of the previous claims, wherein the optical element (504) is an off-axis parabolic mirror with a through hole, and the system further comprises a laser configured to emit laser light through said hole and towards the second optical device (503).

7. The system of any of the previous claims, wherein the light source is a supercontinuum light source.

8. The system of any one of the previous claims, wherein a diameter of a transversal section of the collimated beam, for all the wavelengths from the first wavelength to the second wavelength is of 10 mm or less at any distance of 1 m or less from a point at the first optical arrangement (200), or of 100 mm or less at any distance of 10 m or less from said point at the first optical arrangement (200), the diameter being considered at $1/e^2$ width, said point preferably being at the collimator (205) when the first optical arrangement (200) comprises said collimator (205).

9. The system of any one of the previous claims, wherein a brightness of the collimated beam, composed of all the wavelengths from the first wavelength to the second wavelength, is of 1 mW/cm$^2$ or higher at any distance of 1 m or less from a point at the first optical arrangement (200) , or of 0.01 mW/cm$^2$ or higher at any distance of 10 m or less from said point at the first optical arrangement (200), said point preferably being at the collimator (205) when the first optical arrangement (200) comprises said collimator (205).

10. A method for measuring the color of an area of a sample, comprising:

emitting light with a light source for illuminating a sample located at a given distance by the light source, the light comprising a spectrum of wavelengths that are emitted simultaneously, wherein the spectrum covers continuously, at least, a band of wavelengths within the visible range, from a first wavelength to a second wavelength, the light being spatially coherent, at least at all wavelengths from the first wavelength to the second wavelength, and wherein the first wavelength is comprised in a range between 370 nm and 460 nm, and the second wavelength is comprised in a range between 620 nm and 780 nm;
receiving the spatially coherent light at a first optical arrangement located at a distance from an end of the light source;
at the first optical arrangement, preserving collimated the spatially coherent light if the latter is collimated, or collimating with a collimator said spatially coherent light;
outputting and directing, by the first optical arrangement, a collimated beam of the spatially coherent light towards a surface of the sample that is located at a given distance from the first optical arrangement, said distance preferably being 0.5 m or longer; scanning an area of the sample, part-by-part, by a first optical device of the first optical arrangement changing and dynamically orienting a direction of the directed collimated beam;
collecting light scattered from the sample by a second optical arrangement which comprises a second optical device and an optical element, wherein, by the second optical device, receiving light scattered by the sample at an angle of observation relative to a direction of a specular component reflected from the sample upon the incidence of the collimated beam on the surface of the sample, and, by said second optical device, redirecting the received scattered light towards the optical element, and, by said second optical device in synchronization with the first optical device, during the scanning of the area of the sample changing and dynamically orienting a direction of propagation of the redirected scattered light such that said direction of propagation of the redirected scattered light remains constant with respect to the optical element;
recording, by an optical spectrometer, an optical spectrum of scattered light collected from the sample for each part; and
measuring, by a computing device operatively connected to the optical spectrometer, color coordinates of the area of the sample in a given color space by means of computing an overall optical spectrum from a statistical calculation over all or some of the optical spectra corresponding to all or some of the scanned parts of the area and by analyzing the overall optical spectrum, said analyzing comprising calculating the XYZ Tristimulus values corresponding to said overall optical spectrum.

11. The method of claim 10, wherein a time dependent voltage signal is used for performing said synchronizing.

12. The method of claim 10 or 11, wherein the sample while being illuminated with the collimated beam further receives other light from the environment.

13. The method of any one of the previous claims 10-12 wherein

the collimated beam has a maximum full-angle angular divergence of 0.46 degrees or less, preferably of between 0.01 and 0.20 degrees, for all the wavelengths from the first wavelength to the second wavelength; or
a diameter of a transversal section of the collimated beam, for all the wavelengths from the first wavelength to the second wavelength is of 10 mm or less at any distance of 1 m or less from a point at the first optical arrangement, or of 100 mm or less at any distance of 10 m or less from said point at the first optical arrangement, the diameter being considered at 1/e$^2$ width; or
a beam quality factor M$^2$ of the collimated beam, for all the wavelengths from the first wavelength to the second wavelength, is comprised in a range between 1.0 and 2.0; or
a brightness of the collimated beam, composed of all the wavelengths from the first wavelength to the second wavelength, is of 1 mW/cm$^2$ or higher at any distance of 1 m or less from a point at the first optical arrangement, or of 0.01 mW/cm$^2$ or higher at any distance of 10 m or less from said point at the first optical arrangement (200); and wherein when the first optical arrangement comprises said collimator said point at the first optical arrangement is at the collimator.

**14.** The method of any one of the previous claims 10-13, wherein the optical spectrum integration time is determined by performing the following steps:

- continuously scanning, by the first optical device, a portion, preferably a perimeter, of an area of a white reference;
- simultaneously to said scanning of the portion, recording, by the optical spectrometer, the optical spectrum with different optical spectrum integration times, which are increased progressively and discretely with a certain constant time difference; and
- selecting as the optical spectrum integration time the maximum optical spectrum integration time for which the recorded optical spectrum is not saturated at any wavelength.

**15.** The method of any one of the previous claims 9-14, wherein the XYZ Tristimulus values are calculated by:

- computing a reflectance curve using the overall optical spectrum of the area of the sample, a reference overall optical spectrum of a white reference and a background spectrum;
- multiplying the computed reflectance curve by a CIE standard illuminant spectral curve, by a CIE standard observer spectral curve and by a normalizing constant.

**Fig. 1**

Fig. 2A

**Fig. 2B**

**Fig. 3A**

**Fig. 3B**

**Fig. 3C**

**Fig. 4**

**Fig. 5**

Fig. 6A

**Fig. 6B**

EP 4 745 561 A2

**Fig. 7A**

EP 4 745 561 A2

**Fig. 7B**

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180180480 A1

- US 20060109474 A1

**Non-patent literature cited in the description**

- **C. K. HITZENBERGER** ; **M. DANNER** ; **W. DREXLER** ; **A. F. FERCHER**. Measurement of the spatial coherence of superluminescent diodes. *Journal of Modern Optics*, 1999, vol. 46 (12), 1763-1774
- **K. SAASTAMOINEN** ; **J. TERVO** ; **J. TURUNEN** ; **P. VAHIMAA** ; **A. T. FRIBERG**. Spatial coherence measurement of polychromatic light with modified Young's interferometer. *Optics Express*, 2013, vol. 21 (4), 4061-4071

- Lasers and laser-related equipment - Test methods for laser beam widths, divergence angles and beam propagation ratios. *ISO Standard*, 2005, 11146
- *COLORIMETRY - PART 3: CIE TRISTIMULUS VALUES, ISO/CIE*, 2019, 11664-3, http://cie.co.at/publications/colorimetry-part-3-cie-tristimulus-values-2
- CIE 1931 color space. *Wikipedia*, https://en.wikipedia.org/wiki/CIE 1931 color space